# EUROPEAN PATENT SPECIFICATION

(11) **EP 3 802 106 B1**
(45) Date of publication and mention of the grant of the patent: **03.04.2024**
(21) Application number: 19733556.5
(22) Date of filing: 23.05.2019
(51) Int. Cl.: B32B 5/02, E02D 31/02, B32B 5/10, B32B 5/26, B32B 7/04

(54) **GEOCOMPOSITE AND METHOD FOR THE PRODUCTION THEREOF**
GEOKOMPOSIT UND VERFAHREN ZUR HERSTELLUNG DAVON
GÉOCOMPOSITE ET SON PROCÉDÉ DE PRODUCTION

(30) Priority: 24.05.2018 IT 201800005668; 24.05.2018 IT 201800005673
(43) Date of publication of application: 14.04.2021
(73) Proprietor: Officine Maccaferri S.p.A., 40069 Zola Predosa (BO) (IT)
(72) Inventor: FERRAIOLO, Francesco, 40050 Ca' de' Fabbri (BO) (IT)
(74) Representative: Provvisionato, Paolo
(86) International application number: PCT/IB2019/054268
(87) International publication number: WO 2019/224761

(56) References cited:
- EP-A2- 1 160 367
- US-A1- 2002 044 842
- US-B2- 7 854 330

## Description

### Field of the invention

The present invention relates to a geocomposite. The invention has been developed with particular regard for a geocomposite which is constituted by a plurality of layers and which is suitable for the consolidation and/or drainage of ground. The invention also relates to a method for producing such a geocomposite.

### Technological background

There are known drainage geocomposites which are constituted by layers of different materials. Generally, these drainage geocomposites are constituted by two webs of a geotextile, for example, a nonwoven textile, which are fix to an intermediate separation layer. The separation layer is generally a permeable material, for example, a geomat, geogrid or geonet. A geomat which is suitable for this use is, for example, known from EP1160367 (Greenvision Ambiente Spa) and is constituted by an aggregate of extruded plastics filaments which are entangled with and welded to each other in a hot-forming process in order to form a thin mattress with low density, that is to say, with a high void ratio.

A particular type of drainage geocomposite is known under the name "Terram Frost Blanket" and is produced by TERRAM. This geocomposite is formed by two nonwoven textile layers which are separated by an extruded geogrid of plastics material. The lower nonwoven textile layer is of the water-repellent type in order to prevent or limit the passage of moisture from the ground inside the geocomposite. This geocomposite is specifically configured to mitigate the damage, for example, to road surfacing, as a result of the freezing/thawing cycles of the ground under the road surfacing. The object of this geocomposite is to limit the passage via capillarity of the moisture from the ground under the geocomposite to the upper region of ground or paving.

US 2002/044842 discloses a void-maintaining geocomposite laminate for use below a road surface or below a large structure such as a building, retaining wall or parking lot. The laminate include a fluid-transmissible layer made of a geotextile adjacent an upper or lower surface of a polymer-based core. Optionally, another fluid-transmissible layer, also made of a geotextile, is provided adjacent a lower surface of the polymer-based core to form a geocomposite laminates having high permittivity and high transmissivity. The fluid-transmissible layers show high permittivity, that is, a high rate of vertical transmission of liquids and gases through the geotextile layer and into the core element. The liquid inside the core element could freeze under low temperature, thus leading to damages to road surfacing, as a result of the mentioned freezing/thawing cycles.

US 7 854 330 B2 discloses a geocomposite mat which includes a pre-formed woven or non-woven geotextile, that is needlepunched to an outer geotextile sheet layer to provide a high loft, structurally secured, pre-formed geotextile having a thickness of about 6 mm to about 200 mm, and having a porosity sufficient to receive a powdered or granular contaminant-reactive material. A liquid-permeable outer geotextile sheet then is secured to the filled geotextile, preferably by heating upwardly extending fibres of the preformed geotextile mat to prevent the powdered or granular material from escaping from the geotextile during transportation and installation.

The geocomposites of the known type are effective and are currently suitable in many applications, but have some intrinsic limitations which in some cases prevent or act against the use thereof. When the intermediate separation layer is produced by means of a geogrid, as in the case of the above-mentioned "Terram Frost Blanket", there is the risk that a pressure higher than the one provided for in the geocomposite, for example, in a localized region thereof, may bring the two geotextile webs into contact with each other, through the openings of the geogrid. This involves the disappearance in this zone of the insulating/draining effect of the geocomposite, which therefore stops performing the function thereof. In order to overcome this disadvantage, therefore, it is necessary to use relatively rigid geotextile webs which can withstand the localized flexion caused by a high pressure, which naturally increases the cost of the webs themselves and therefore of the geocomposite in which they are used.

Another limitation of the geocomposites of the known type is given by the limited thickness which does not make it sufficiently soft for use, for example, as a substrate for playing fields in order to ensure an adequate absorption effect for the impacts of athletes' footsteps ("shock absorption"), therefore not succeeding in ensuring the prevention of damage to the joints of the athletes.

### Statement of invention

An object of the invention is to provide a geocomposite which overcomes the disadvantages of the prior art and in particular which reduces the risk of loss of efficiency as a result of localized high pressures and which therefore ensures an adequate absorption of the impacts ("shock absorption"). Another object of the invention is to produce a geocomposite which is simple and economic to produce and which is effective, convenient and reliable to use. Another object of the invention is to provide a method for producing geocomposites which is flexible and which can be used effectively to produce different geocomposites which have desired mechanical and filtering characteristics.

In order to achieve the above-indicated objects, the invention relates to a geocomposite and a method which is suitable for the production thereof, having the characteristics indicated in the appended claims.

According to a particular aspect, there is described a basic geocomposite which is suitable for the consolidation and/or drainage of ground. The basic geocomposite may be composed of a plurality of layers of geosynthetics. The basic geocomposite comprises at least two layers of geotextile, preferably a nonwoven textile, which are separated by a three-dimensional geomat. A geomat may be a type of mattress which is produced with extruded filaments of plastics material which are entangled with each other after the extrusion so as to produce a structure having a given thickness and having a very low density and irregular voids therein. More specifically, there is described a geocomposite which comprises at least a first geotextile web and at least a second geotextile web which are thermofixed to the sides of an intermediate separation layer. The intermediate separation layer is produced by means of at least one geomat of entangled plastics threads. The geomat has a thickness of approximately from 4 to 5 mm, or more.

According to a specific aspect, the geotextile webs are relatively flexible, being constituted by entangled filaments and where applicable thermofixed during the production process. According to a variant, at least one of the geotextile webs may be water-repellent, that is to say, may have a dimension of the pores which is sufficiently small to repel the moisture which would tend to penetrate the web via capillarity.

According to another aspect, the basic geocomposite may be used to form a geocomposite having a multiple structure. In the multiple geocomposite, at least one of the webs of the basic geocomposite is thermofixed to at least one additional geosynthetic layer. The at least one additional geosynthetic layer is selected from the group comprising geogrids, geonets, geomats, geotextiles, geomembranes or a combination or stratification thereof.

According to a specific aspect, the geocomposite may comprise a geomat and/or a geogrid which are connected to one or both of the webs of the basic geotextile. A structure of this type has - in addition to the desired drainage characteristics of the ground - a good capacity for absorbing shocks which make it particularly advantageous, for example, in the production of tracks or playing fields and the like. The presence of an intermediate geotextile in a multi-layered product constitutes a planar reinforcement which, by absorbing the impacts with its own traction resistance, transmits a smaller load to the geomat layer underneath, thereby increasing the resistance to being crushed. If the geocomposite has a geomat and a geogrid which are connected to each other, for example, by hot thermofixing, it appears to demonstrate a particularly high resistance with respect to the thickness thereof without the drainage capacities thereof being reduced. This makes the use thereof advantageous, for example, at locations where the localized pressures applied to the geocomposite become high, for example, for use in landfill sites.

If the geocomposite has an additional layer which is constructed with a geomat, there is described a particular aspect according to which there is applied thereto, preferably by thermowelding, an impermeable geomembrane.

In the production process of a geocomposite of the type indicated above, there is initially produced the basic type geocomposite with a geomat as the separation element between two geotextile layers, preferably a nonwoven textile layer. The production is carried out by producing the geomat according to techniques known in the field. The geomat is then caused to pass through a pair of rollers which convey the two geotextile layers which are unwound from respective coils. The application of heat, for example, by means of localized heaters or by heating the rollers themselves, brings about the localized softening of the filaments of the geomat to which the two geotextiles are adhesively bonded by thermowelding at both sides. The basic geocomposite produced in this manner is cooled and is wound in coils for the subsequent processing in order to manufacture the multi-layered geocomposite variants mentioned above. In particular, a coil of basic geocomposite may be unwound and supplied by means of one or more rollers under a geomat and/or geogrid, with local application of heat in order to allow the geomat and/or geogrid to be thermowelded to one of the geotextiles of the basic geocomposite. The local application of heat may also bring about the thermowelding of the geomat and the geogrid with respect to each other, as well as to the geotextile of the basic geocomposite in a continuous process. Alternatively, the geogrid and the geomat may be thermowelded upstream of the thermowelding thereof to the geotextile of the basic geocomposite, to which they are therefore subsequently connected by thermowelding.

In a variant, the basic geotextile which is unwound from the coil is supplied under a geomat and a geomembrane. In this case, the local application of heat also allows the geomat and the geomembrane to be thermowelded to the basic geocomposite.

In the production plant of the geocomposite, both the temperature and the pressure applied for producing the thermowelding of the various layers with respect to each other are adjusted so as to ensure that they are adequate for fixing the layers to each other without exceeding such values as to compact the geocomposite and in particular the geomat(s) to such an extent as to compromise the drainage function of the geocomposite.

### Brief description of the drawings

Other advantages and characteristics will become clear from the following detailed description of a preferred embodiment which is given with reference to the appended drawings which are provided purely by way of non-limiting example and in which:
- Figure 1 is a schematic perspective view of an example of the basic geocomposite, incorporating aspects of the present invention,
- Figure 2 is a schematic view of a plant for producing the basic geocomposite of Figure 1,
- Figure 3 is a schematic, perspective view of a first example of a multi-layered geocomposite on the basis of the basic geocomposite of Figure 1,
- Figure 4 is a schematic view of a plant for producing the multi-layered geocomposite of Figure 3,
- Figure 5 is a schematic perspective view of a second example of the multi-layered geocomposite on the basis of the basic geocomposite of Figure 1, and
- Figure 6 is a schematic view of a plant for producing the multi-layered geocomposite of Figure 5.

### Detailed description

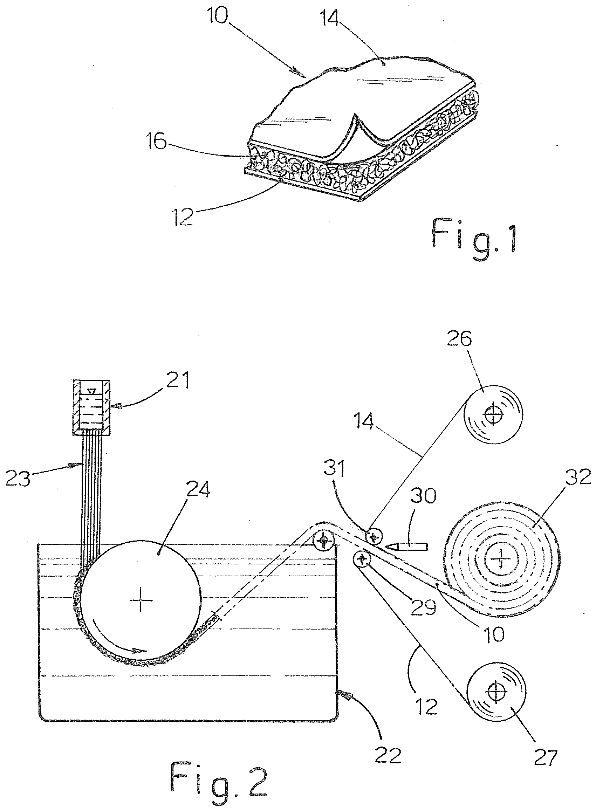

With reference now to Figure 1, a basic geocomposite 10 comprises a lower web 12 of a geotextile, preferably but in a non-limiting manner a non-woven textile, for example, of polypropylene. The basic geocomposite 10 further comprises an upper web 14 of a geotextile which is preferably but in a non-limiting manner a non-woven textile, for example, of polypropylene. The lower web 12 and the upper web 14 may be identical to or different from each other. In particular, for applications in which it is advantageous or necessary to produce a protection from ice, the lower web 12 may be of the water-repellent type, in particular with a dimension of the pores which is sufficiently small and such as to prevent moisture from passing through the lower web 12 via capillarity. The lower web 12 and the upper web 14 are fixed to the two sides of an intermediate separation layer 16 which is produced with a geomat. As known in the sector, a geomat is a layer of material which is formed with entangled filaments of plastics material which are welded to each other so as to produce a structure having a given thickness and having a very low density and irregular voids therein. The intermediate separation layer 16 has a thickness of approximately from 4 to 5 mm or more so as to prevent any contact, even accidental, between the lower web 12 and the upper web 14 following, for example, a localized pressure or crushing of the basic geocomposite 10 while being put into operation.

The basic geocomposite 10 is produced in a plant and according to a method of the generally known type, as schematically shown in Figure 2. There are emitted from an extruder 21 hot filaments 23 of a plastics material, for example, polypropylene, polyethylene polyamide, polyester or an admixture of those polymers, and where applicable with a portion which also has a natural base. There is positioned below the extruder 21 a cooling tank 22 which contains a cooling liquid for cooling the hot filaments 23 which, by being supported on the roller 24, are intertwined with each other, forming a three-dimensional material structure. The extrusion speed of the hot filaments 23 and the speed of the roller 24 are adjusted and synchronized in order to obtain a geomat 16 having a predetermined thickness, approximately from 4 to 5 mm or more. The geomat 16 is then caused to pass through a pair of rollers, a lower roller 29 and an upper roller 31, which preferably compress it slightly. One of the two webs which form the basic geocomposite 10 slides on the upper roller 31, for example, the upper web 14, which is supplied from a first coil 26. The other of the two webs slides on the lower roller 29, for example, the lower web 12, which is supplied from a second coil 27. In the passage between the lower roller 29 and the upper roller 31, the geomat 16 and the lower web 12 and upper web 14 are heated locally so as to become thermowelded. The localized heating may be carried out by heating the same lower roller 29 and upper roller 31 or by separate heating means, such as torches 30 or radiators or other functionally similar means.

In a variant which is not illustrated, the upper web 12 and lower web 14 are caused to pass both on the lower roller 29 and upper roller 31, respectively, while the roller 24 provides for the formation of the single geomat which will form the separation material 16 of the basic geocomposite 10.

The basic geocomposite 10 described above may be advantageously used for producing multi-layered geocomposites. For this purpose, the basic geocomposite 10 may be conveyed to subsequent processing steps both online and offline. In the first case, there are provided downstream of the production plant for the basic geocomposite 10 additional processing stations which are synchronized with the production station of the basic geocomposite 10. Alternatively, the basic geocomposite 10 is stored after being, for example, coiled in basic coils 32, as schematically indicated in Figure 2, which can be subsequently used for producing multi-layered geocomposites.

This last mode of use allows a substantial flexibility of use, being able to manufacture the basic geocomposite 10 both for use only as a conventional drainage geocomposite and for use as a basic material for producing more complex geocomposites which are suitable from time to time for specific requirements, in the quantities required at the time.

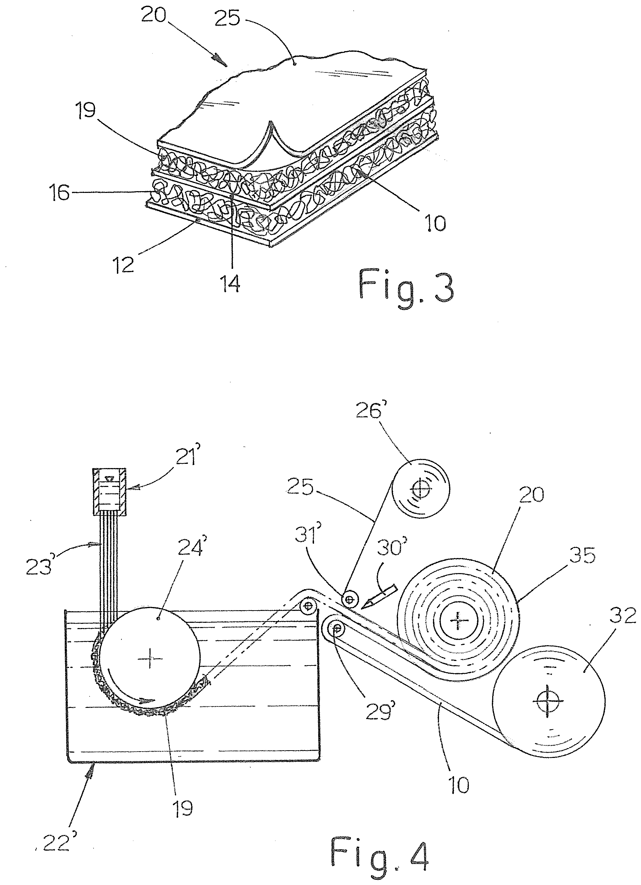

With reference now to Figure 3, a first example of a complex geocomposite 20 comprises the basic geocomposite 10 which is constituted by two geotextile webs 12, a lower web 12 and upper web 14, which are welded to the intermediate separation layer 16 which is produced with a geomat, as indicated above, having a thickness of from 4 to 5 mm or more. There is arranged, in a thermowelded state, on the upper web 14, at the side opposite the intermediate separation layer 16, a second intermediate separation layer 19 which is also produced, for example, with a geomat, preferably also having a thickness of from 4 to 5 mm or more. There is arranged, in a thermowelded state, on the second intermediate separation layer 19 an external web 25 of a geotextile, which is preferably but in a non-limiting manner a non-woven textile, for example, of polypropylene or one of the materials set out above with reference to the lower web 12 and upper web 14. The external web 25 may be of the type which is identical to the lower web 12 and/or the upper web 14, or of the type which is different from both the lower web 12 and upper web 14. According to a particular embodiment, the external web 25 may also be an impermeable or water-repellent geosynthetic.

The multi-layered geocomposite 20 described above and illustrated by way of example in Figure 3 may be produced in a plant and according to a method which are schematically indicated in Figure 4. The plant has similarities to the one schematically described in Figure 2 for producing the basic geocomposite 10. There are emitted from an extruder 21' hot filaments 23' of a plastics material, for example, polypropylene, polyethylene polyamide, polyester or an admixture of those polymers, and where applicable with a portion which also has a natural base. There is positioned under the extruder 21 a cooling tank 22' which contains a cooling liquid for cooling the hot filaments 23' which, by being supported on the roller 24', are intertwined with each other, forming a three-dimensional material structure. The extrusion speed of the hot filaments 23' and the speed of the roller 24' are adjusted and synchronized in order to obtain a separation geomat 19 having a predetermined thickness, preferably approximately from 4 to 5 mm or more. The separation geomat 19 is then caused to pass through a pair of two rollers, a lower roller 29' and an upper roller 31', which preferably compress it slightly. The basic geocomposite 10 which is unwound from the basic coil 32 passes over the lower roller 29' .

The geotextile 25 which is unwound from a respective coil 26' is caused to pass over the upper roller 31'.

During the passage between the lower roller 29' and upper roller 31', the basic geocomposite 10 is welded to the separation geomat 19 and connected to the external web 25 in order to form the multi-layered geocomposite 20 which is wound on a collection coil 35. The geomat 19 and the basic geocomposite 10 are heated locally so as to thermoweld them. The localized heating may be carried out by heating the same lower roller 29' and upper roller 31' or by separate heating means, such as torches 30' or radiators or other functionally similar means.

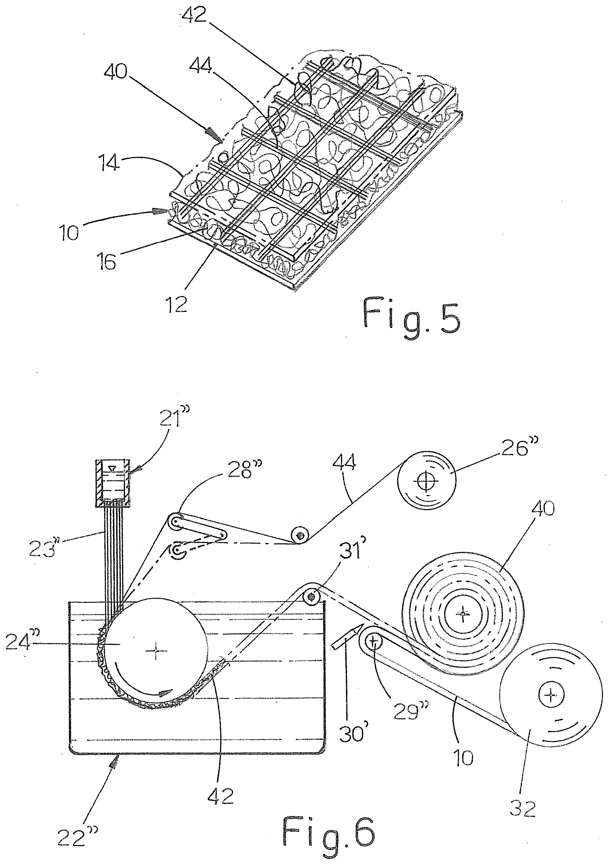

With reference now to Figure 5, a second example of a complex geocomposite 40 comprises the basic geocomposite 10 which is described above and which is constituted by two geotextile webs 12, a lower web 12 and upper web 14, which are welded to the intermediate separation layer 16 which is produced with a geomat, as indicated above, having a thickness of from 4 to 5 mm or more. At the side opposite the intermediate separation layer 16, there is fixed to the upper web 14 a geomat 42 which is reinforced with a geogrid 44, for example, of the type constituted by bands of plastics filaments which are thermowelded to each other in the manner of a warp and weft as indicated above with reference to the complex geocomposite 20 of Figure 3. The geogrid 44 is mixed and/or interposed with entangled plastics filaments which form the geomat 42 during the extrusion process.

The multi-layered geocomposite 40 described above and illustrated by way of example in Figure 5 may be produced in a plant and according to a method schematically illustrated in Figure 6.

There are emitted from an extruder 21" hot filaments 23" of a plastics material, for example, polypropylene, polyethylene polyamide, polyester or an admixture of those polymers, and where applicable with a portion which also has a natural base. There is positioned below the extruder 21" a cooling tank 22'' which contains a cooling liquid for cooling the hot filaments 23'' which, by being supported on the roller 24", are intertwined with each other, forming a three-dimensional material structure. There is further caused to pass over the roller 24'' the geogrid 44 which is unwound from a coil 26'' and which passes over a tensioner 28'', the recording position of which influences the position of the geogrid 44 which is more or less centred with respect to the centre of the geomat 42 which is formed by the filaments 23'' which are welded to each other and also to the geogrid 44. The extrusion speed of the hot filaments 23'' and the speed of the roller 24" are adjusted and synchronized in order to obtain a separation geomat 42 having a predetermined thickness, preferably approximately from 4 to 5 mm or more. The separation geomat 42 which is reinforced by the geogrid 44 is then caused to pass through a pair of two rollers, a lower roller 29" and an upper roller 31" in order to be connected to the basic geocomposite 10 in a manner similar to that described above with reference to Figure 4, to which reference may be made.

Naturally, there may be provided other variants of complex geocomposites on the basis of the basic geocomposite 10, using any combination of one or more geogrids, geonets, geomats, geotextiles and/or geomembranes which are stratified at one of the two sides or at both sides of the basic geocomposite 10, according to production principles which will be evident to the person skilled in the art of the sector upon reading the present description and from the appended Figures. The intermediate separation layer 16 may also comprise one or more geonets or geogrids of material and/or one or more metal reinforcement nets which is/are fixed or interposed or interwoven with/to the entangled plastics filaments which compose the geomat of the intermediate separation layer 16.

Naturally, the principle of the invention remaining the same, the forms of embodiment and details of construction may be varied widely with respect to those described and illustrated without thereby departing from the scope of the present invention as defined in the appended claims.

## Claims

1. A geocomposite which is suitable for the consolidation and/or drainage of ground, composed of a plurality of layers comprising at least a first web (12) of geotextile material and at least a second web (14) of geotextile material which are thermofixed to respective sides of an intermediate separation layer (16) which is produced by means of at least one geomat of entangled plastics threads having a thickness of approximately 4 mm or more, in order to form a basic geocomposite (10), in which there is thermofixed to at least one of the first web (12) and the second web (14) of the basic geocomposite (10) at least one additional layer (19, 42, 44) of a geosynthetic selected from the group comprising geogrids, geonets, geomats, geotextiles, geomembranes or a combination or stratification thereof.

2. A geocomposite according to claim 1, wherein at least one of the first and second geotextile webs (12, 14) is a water-repellent non-woven textile.

3. A geocomposite according to claim 1 or claim 2, wherein the at least one additional layer comprises at least one layer which is produced by means of a geogrid (44) and/or a geomat (42) which is/are thermofixed to one of the two geotextile webs (12, 14) of the basic geocomposite (10).

4. A geocomposite according to any one of the preceding claims, wherein the at least one additional layer comprises at least one geomat (42) which is reinforced by a geogrid (44), in which the plastics filaments of the geomat (42) are entangled with the geogrid (44), the geomat (42) which is reinforced by the geogrid (44) being thermofixed to one of the two geotextile webs (12, 14) of the basic geocomposite (10) .

5. A geocomposite according to any one of the preceding claims, wherein the at least one additional layer comprises at least one geomat (19) which is thermofixed to one (12) of the two geotextile webs (12, 14), an external web (25) being thermofixed to the geomat (19), at the side opposite the one (12) of the two geotextile webs (12, 14).

6. A geocomposite according to claim 5, wherein the external web (25) is a geomembrane.

7. A method for preparing a geocomposite according to any one of the preceding claims, comprising the step of producing a basic geocomposite (10) on the basis of a geomat (16) of entangled plastics threads which are obtained by means of hot extrusion (21), the geomat (16) having a thickness of approximately 4 mm or more, and being subsequently thermowelded at the sides thereof to two geotextile webs (12, 14) by means of localized heating, the method further comprising the step of supplying the basic geocomposite (10) to a thermowelding station in order to fix to at least one of the webs (12, 14) of the basic geocomposite (10) one or more layer(s) (19, 42, 44) of a geosynthetic which is selected from the group comprising geogrids, geonets, geomats, geotextiles, geomembranes or a combination or stratification thereof.

## Patentansprüche

1. Geokomposit, das zur Verfestigung und/oder Drainage von Böden geeignet ist, bestehend aus einer Mehrzahl von Schichten, die mindestens eine erste Bahn (12) aus geotextilem Material und mindestens eine zweite Bahn (14) aus geotextilem Material umfassen, die an den jeweiligen Seiten einer dazwischenliegenden Trennschicht (16), die mittels mindestens einer Geomatte aus verschlungenen Kunststofffäden mit einer Dicke von etwa 4 mm oder mehr hergestellt wird, thermofixiert sind, um ein Basis-Geokomposit (10) zu bilden, bei dem auf mindestens einer der ersten Bahn (12) und der zweiten Bahn (14) des Basis-Geokomposits (10) mindestens eine zusätzliche Schicht (19, 42, 44) eines Geokunststoffs, ausgewählt aus der Gruppe, die Geogitter, Geonetze, Geomatten, Geotextilien, Geomembranen oder eine Kombination oder Schichtung davon umfasst, thermofixiert ist.

2. Geokomposit nach Anspruch 1, wobei mindestens eine der ersten und der zweiten geotextilen Bahnen (12, 14) ein wasserabweisendes Vlies ist.

3. Geokomposit nach Anspruch 1 oder Anspruch 2, wobei die mindestens eine zusätzliche Schicht mindestens eine Schicht umfasst, die durch ein Geogitter (44) und/oder eine Geomatte (42) gebildet ist, die an einer der beiden geotextilen Bahnen (12,14) des Basis-Geokomposits (10) thermofixiert ist/sind.

4. Geokomposit nach einem der vorhergehenden Ansprüche, wobei die mindestens eine zusätzliche Schicht mindestens eine Geomatte (42) umfasst, die durch ein Geogitter (44) verstärkt ist, wobei die Kunststofffäden der Geomatte (42) mit dem Geogitter (44) verschlungen sind, wobei die durch das Geogitter (44) verstärkte Geomatte (42) an einer der beiden geotextilen Bahnen (12, 14) des Basis-Geokomposits (10) thermofixiert ist.

5. Geokomposit nach einem der vorhergehenden Ansprüche, wobei die mindestens eine zusätzliche Schicht mindestens eine Geomatte (19) umfasst, die an einer (12) der beiden geotextilen Bahnen (12, 14) thermofixiert ist, wobei eine äußere Bahn (25) auf der der einen (12) der beiden geotextilen Bahnen (12, 14) gegenüberliegenden Seite an der Geomatte (19) thermofixiert ist.

6. Geokomposit nach Anspruch 5, wobei die äußere Bahn (25) eine Geomembran ist.

7. Verfahren zur Herstellung eines Geokomposits nach einem der vorhergehenden Ansprüche, umfassend den Schritt des Herstellens eines Basis-Geokomposits (10) auf der Grundlage einer Geomatte (16) aus verschlungenen Kunststofffäden, die durch Heißextrusion (21) gewonnen werden, wobei die Geomatte (16) eine Dicke von etwa 4 mm oder mehr aufweist und anschließend durch lokale Erwärmung an ihren Seiten mit zwei geotextilen Bahnen (12, 14) thermoverschweißt wird, wobei das Verfahren ferner den Schritt des Zuführens des Basis-Geokomposits (10) zu einer Wärmeschweißstation umfasst, um an mindestens einer der Bahnen (12, 14) des Basis-Komposits (10) eine oder mehrere Schicht(en) (19, 42, 44) eines Geokunststoffs, ausgewählt aus der Gruppe, die Geogitter, Geonetze, Geomatten, Geotextilien, Geomembranen oder eine Kombination oder Schichtung davon umfasst, zu fixieren.

## Revendications

1. Géocomposite adapté pour la consolidation et/ou le drainage d'un sol, composé d'une pluralité de couches comprenant au moins une première bande (12) de matériau géotextile et au moins une deuxième bande (14) de matériau géotextile qui sont thermofixées sur des côtés respectifs d'une couche de séparation intermédiaire (16) qui est produite à l'aide d'au moins un géomatelas composé de fils de plastique emmêlés ayant une épaisseur d'environ 4 mm ou plus, afin de former un géocomposite basique (10), dans lequel est thermofixée sur au moins l'une de la première bande (12) et de la deuxième bande (14) du géocomposite basique (10) au moins une couche supplémentaire (19, 42, 44) d'un géosynthétique choisi parmi le groupe comprenant des géogrilles, des géofilets, des géomatelas, des géotextiles, des géomembranes ou une combinaison ou stratification de ceux-ci.

2. Géocomposite selon la revendication 1, dans lequel au moins l'une de la première et de la deuxième bandes de géotextile (12, 14) est un textile non tissé hydrofuge.

3. Géocomposite selon la revendication 1 ou revendication 2, dans lequel la au moins une couche supplémentaire comprend au moins une couche qui est produite à l'aide d'une géogrille (44) et/ou d'un géomatelas (42) qui est/sont thermofixé(s) sur l'une des deux bandes de géotextile (12, 14) du géocomposite basique (10).

4. Géocomposite selon l'une quelconque des revendications précédentes, dans lequel la au moins une couche supplémentaire comprend au moins un géomatelas (42) qui est renforcé par une géogrille (44), dans lequel les filaments en plastique du géomatelas (42) sont emmêlés avec la géogrille (44), le géomatelas (42) qui est renforcé par la géogrille (44) étant thermofixé sur l'une des deux bandes de géotextile (12, 14) du géocomposite basique (10).

5. Géocomposite selon l'une quelconque des revendications précédentes, dans lequel la au moins une couche supplémentaire comprend au moins un géomatelas (19) qui est thermofixé sur l'une (12) des deux bandes de géotextile (12, 14), une bande externe (25) étant thermofixée sur le géomatelas (19), au niveau du côté opposé à l'une (12) des deux bandes de géotextile (12, 14).

6. Géocomposite selon la revendication 5, dans lequel la bande externe (25) est une géomembrane.

7. Procédé de préparation d'un géocomposite selon l'une quelconque des revendications précédentes, comprenant l'étape de production d'un géocomposite basique (10) sur la base d'un géomatelas (16) de fils de plastique emmêlés qui sont obtenus à l'aide d'une extrusion à chaud (21), le géomatelas (16) ayant une épaisseur d'environ 4 mm ou plus, et étant ensuite thermosoudé au niveau des côtés de celui-ci sur deux bandes de géotextile (12, 14) à l'aide d'un chauffage localisé, le procédé comprenant en outre l'étape de fourniture du géotextile basique (10) à un poste de thermosoudage afin de fixer sur au moins l'une des bandes (12, 14) du géocomposite basique (10) une ou plusieurs couche(s) (19, 42, 44) d'un géosynthétique qui est choisi parmi le groupe consistant en des géogrilles, des géofilets, des géomatelas, des géotextiles, des géomembranes ou une combinaison ou stratification de ceux-ci.
